# EUROPEAN PATENT SPECIFICATION

(11) **EP 4 571 132 B1**
(45) Date of publication and mention of the grant of the patent: **18.11.2026**
(21) Application number: 24215460.7
(22) Date of filing: 26.11.2024
(51) Int. Cl.: F16B 31/02

(54) **FASTENING SYSTEM, A FASTENER ASSEMBLY, AND A METHOD OF PRELOADING THE FASTENER ASSEMBLY**
BEFESTIGUNGSSYSTEM, BEFESTIGUNGSANORDNUNG UND VERFAHREN ZUM VORSPANNEN DER BEFESTIGUNGSANORDNUNG
SYSTÈME DE FIXATION, ENSEMBLE DE FIXATION ET PROCÉDÉ DE PRÉCHARGEMENT DE L'ENSEMBLE DE FIXATION

(30) Priority: 12.12.2023 US 202318537286
(43) Date of publication of application: 18.06.2025
(73) Proprietor: The Boeing Company, Arlington, VA 22202 (US)
(72) Inventor: NADEL, ADAM IAN, Arlington, 22202 (US); LARSON-SMITH, KJERSTA LYNN, Arlington, 22202 (US)
(74) Representative: Sandri, Sandro

(56) References cited:
- JP-A- H10 274 225
- US-A1- 2004 200 290

## Description

### TECHNICAL FIELD

The present disclosure relates to a fastening system for fastening together components of aircraft, comprising a first component, a second component and a fastener assembly configured to attach together the first component and the second component. Furthermore, the present disclosure relates to a method of preloading a fastener assembly.

### BACKGROUND

Many components of an aircraft are fastened together via a fastener, such as a bolt or a screw, etc., at a joint. A torque wrench may be used to tighten a nut onto the bolt or the screw. The amount of tightening of the nut via the torque wrench is based on existing calculations of friction to tighten the nut. Generally, the torque wrench tightens the nut until a desired preload has been reached in the fastener. However, variations such as frictional variations in the threads of the fasteners may cause variations in the preload of the joint. Variations in the preload may cause fatigue in the fastener over its life.

Document JP H10 274225 A, with its abstract, describes a screw fastening display body composed of two flat washers and a display part provided therebetween and, in the display part, a soft material such as silicon rubber is formed in a shape nearly similar to that of the flat washers and it is not bulged out of the outer peripheral edge of the flat washer before fastening. The display is interposed between a screw shaft or a nut and body to be fastened. The display is pressed by fastening, and a bulged out part is formed where the display part is bulged out of the outer peripheral edges of the flat washers to be visible from the outside.

Document US 2004/200290 A1, with its abstract, describes a measuring device for controlling an installation torque of a fastening element and securable to engagement means of the fastening element. It includes an indicator for a visual display of the installation torque, a plurality of microcapsules filled with a dispersible color die and supported on the indicator, and a transparent, at least regionwise, covering provided on an outer surface of the indicator; and an opening through which a fastening element can extend.

### SUMMARY

Therefore, it is desirable to develop a fastening system and a fastener assembly that improves repeatability of a preload, and other benefits are discussed herein.

The present disclosure provides a fastening system including the features described at claim 1.

Furthermore, the present disclosure provides a fastening system including the features described at claim 5.

Additionally, the present disclosure provides a fastening system including the features described at claim 6.

Yet, the present disclosure provides a fastening system including the features described at claim 7.

The dependent claims outline advantageous forms of embodiment of the system.

The present disclosure also provides a method of preloading a fastener assembly having the steps described at claim 14. The dependent claim outlines an advantageous way of carrying out the method.

The detailed description and the drawings or FIGS. are supportive and descriptive of the disclosure, but the claim scope of the disclosure is defined solely by the claims. While some of the best modes and other configurations for carrying out the claims have been described in detail, various alternative designs and configurations exist for practicing the disclosure defined in the appended claims.

### BRIEF DESCRIPTION OF THE DRAWINGS

FIG. 1 is a schematic illustration of a fastening system with a layer removed.
FIG. 2 is a schematic illustration of a fastener assembly clamping together a first component and a second component without using one or more washers, with example locations of the layer illustrated.
FIG. 3 is a schematic illustration of the fastener assembly clamping together the first component and the second component without using one or more washers, with additional example locations of the layer illustrated.
FIG. 4 is a schematic illustration of the fastener assembly clamping together the first component and the second component using one or more washers, with additional example locations of the layer illustrated relative to the one or more washers.
FIG. 5 is a schematic illustration of the fastener assembly clamping together the first component and the second component using one or more washers, with yet other example locations of the layer illustrated relative to the one or more washers.
FIG. 6 is a schematic enlarged view of the layer when using a housing to separate a first part and a second part, with the first part outside of the housing.
FIG. 7 is a schematic enlarged view of the layer when using the housing to separate the first part and the second part, with the second part outside of the housing.
FIG. 8 is a schematic enlarged view of the layer when using the housing to separate the first part and the second part, with the first part and the second part disposed in different ones of the housing.

The present disclosure may be extended to modifications and alternative forms, with representative configurations shown by way of example in the drawings and described in detail below. Inventive aspects of the disclosure are not limited to the disclosed configurations. Rather, the present disclosure is intended to cover modifications, combinations, and alternatives falling within the scope of the disclosure as defined by the appended claims.

### DETAILED DESCRIPTION

Those having ordinary skill in the art will recognize that all directional references (e.g., above, below, upward, up, downward, down, top, bottom, left, right, vertical, horizontal, etc.) are used descriptively for the FIGS. to aid the reader's understanding, and do not represent limitations (for example, to the position, orientation, or use, etc.) on the scope of the disclosure, as defined by the appended claims. Moreover, terms such as "first," "second," "third," and so on, may be used to describe separate components. Such terminology may include the words specifically mentioned above, derivatives thereof, and words of similar import. Furthermore, the term "substantially" can refer to a slight imprecision or slight variance of a condition, quantity, value, or dimension, etc., some of which are within manufacturing variance or tolerance ranges.

As used herein, an element or step recited in the singular and preceded by the word "a" or "an" should be understood as not necessarily excluding the plural of the elements or steps. Further, any reference to "one configuration" is not intended to be interpreted as excluding the existence of additional configurations that also incorporate the recited features. Moreover, unless explicitly stated to the contrary, configurations "comprising" or "having" an element or a plurality of elements having a particular property may include additional elements not having that property. The phrase "at least one of" as used herein should be construed to include the non-exclusive logical "or", i.e., A and/or B and so on depending on the number of components.

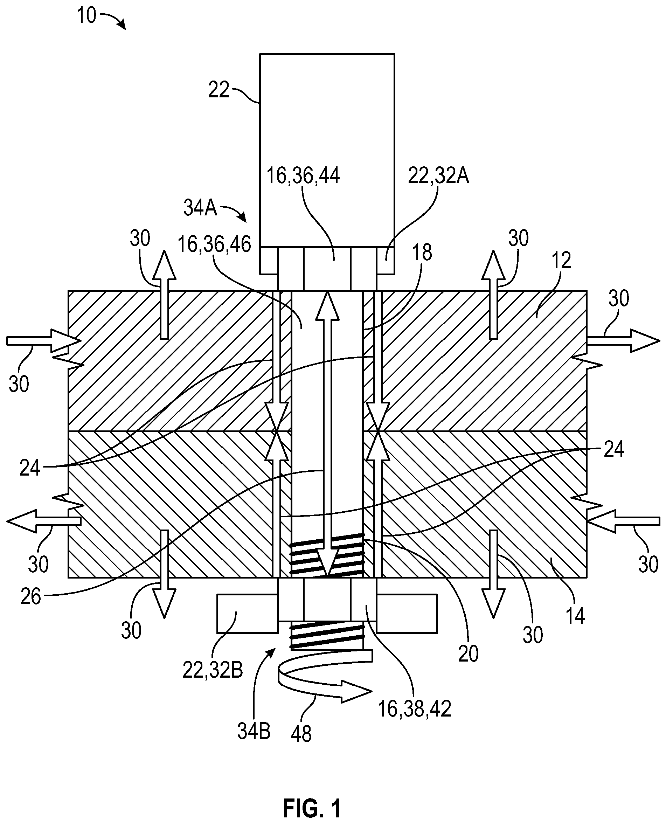

Referring to the figures, wherein like numerals indicate like or corresponding parts throughout the several views, a fastening system 10 is generally shown in FIG. 1.

Continuing with FIG. 1, the fastening system 10 includes a first component 12 and a second component 14, which may be attached together. More specifically, a fastener assembly 16 is configured to attach together the first component 12 and the second component 14. In certain configurations, the first component 12 may define a first aperture 18 and the second component 14 may define a second aperture 20. Generally, the first aperture 18 and the second aperture 20 align with each other to receive the fastener assembly 16.

The first component 12 and the second component 14 may be any suitable configuration, and non-limiting examples of the components 12, 14 may include one or more of panels, such as inner panels, outer panels, skin panels, etc., frames, brackets, stringers, bulkheads, keels, ribs, doors, fittings, gear, or any other components 12, 14 that may be attached to each other, and combinations thereof. Therefore, the first component 12 and the second component 14 may be used in various applications, such as, but not limited to: flight vehicles, such as aircraft, drones, payloads, space shuttles, etc.; movable platforms, such as locomotives, automobiles, off-road vehicles, watercrafts, farm equipment, etc.; equipment, buildings, or any other applications where it is desirable to attach together components 12, 14.

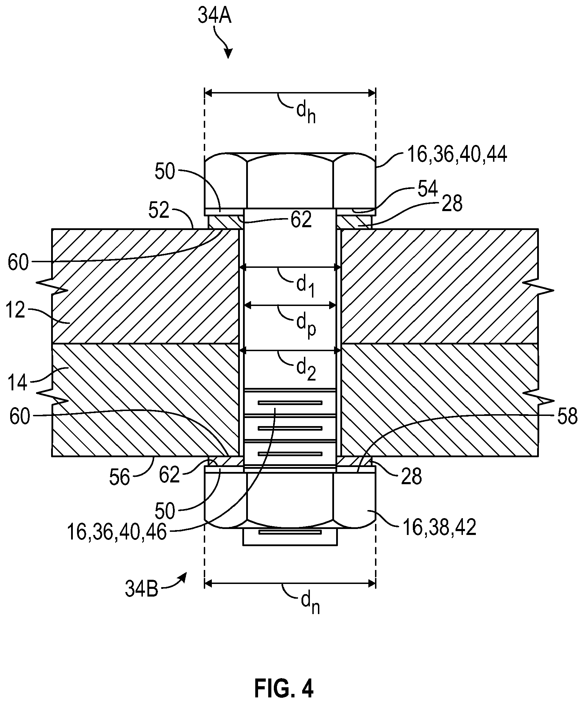

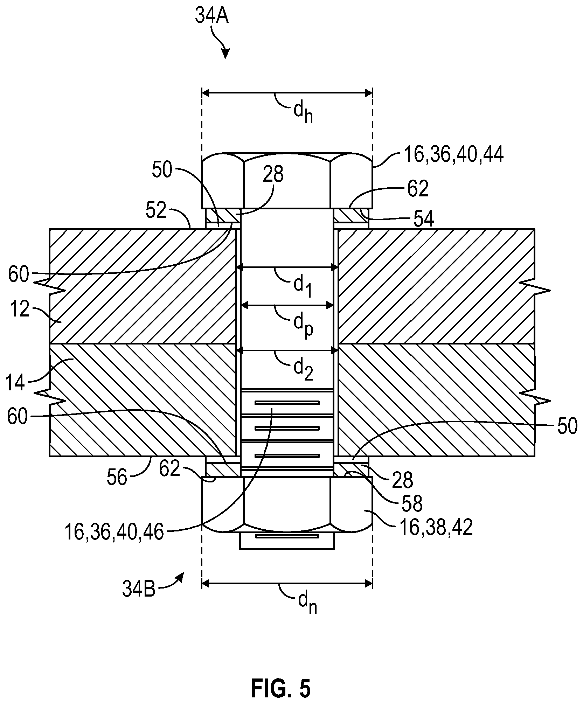

Generally, a tool or implement 22 (shown in FIG. 1) is used to tighten the fastener assembly 16 to the first component 12 and the second component 14 to attach or clamp together the first component 12 and the second component 14 at a joint. More specifically, the fastener assembly 16 is tightened until a predetermined compressive load 24 is reached that is effective to clamp together the first component 12 and the second component 14 at the joint, which in turn causes a tension load 26 to be applied to the fastener assembly 16, which in turn establishes a preload on the fastener assembly 16. As the fastener assembly 16 tightens, the first component 12 and the second component 14 are squeezed together to create compression in the first component 12 and the second component 14, and correspondingly, create tension in the fastener assembly 16 as the preload. It is to be appreciated that more than two components 12, 14, i.e., any suitable number of components, may be clamped together at the joint. Generally, the preload is equal and opposite to the compressive load 24 in the first component 12, the second component 14 (plus any other number of components being used), and washer(s) 28 (numbered in FIGS. 4 and 5) if using washer(s) 28. The washer(s) 28 will be discussed further below.

The predetermined compressive load 24 may be a threshold based on the desired preload of the fastener assembly 16, which may be based on engineering requirements, government requirements, aircraft parameters, etc. The predetermined compressive load 24 will be referred to generally as the compressive load 24 in the below discussion.

For example, if the first component 12 and the second component 14 are loaded, external forces 30 are applied to the first component 12 and the second component 14 in various directions, some of which may be pulling apart the first component 12 and the second component 14. The fastener assembly 16 is designed to counter the external forces 30 and maintain the attachment or clamping between the first component 12 and the second component 14, and, in doing so, the fastener assembly 16 is repeatedly put under stress which may cause fatigue. Fatigue may be reduced or improved by preloading the fastener assembly 16, which may improve the structural life of the fastener assembly 16. Furthermore, preloading the fastener assembly 16, as described herein, may reduce alternating stress in the fastener assembly 16 under repeated loading.

In certain configurations, the tool 22 may include one or more segments 32A, 32B that cooperate to tighten the fastener assembly 16. Therefore, one of the segments 32A may engage one end 34A of the fastener assembly 16 and another one of the segments 32B may engage another end 34B of the fastener assembly 16 during tightening via the tool 22. In certain configurations, the tool or implement 22 is a wrench, optionally a torque wrench, a drill, an Allen key, a screw driver, a nut driver, a socket wrench, or any other suitable tool or implement 22 being able to tighten the fastener assembly 16 to the first component 12 and the second component 14.

Turning to example details of the fastener assembly 16, in certain configurations the fastener assembly 16 may include a first fastener portion 36 and a second fastener portion 38. As shown in FIGS. 1-5, in certain configurations, generally, the fastener assembly 16 may include a fastener 40 and a nut 42, in which the first fastener portion 36 may include the fastener 40, and the second fastener portion 38 may include the nut 42. More specifically, in certain configurations, the first fastener portion 36 may include a head 44 and the second fastener portion 38 includes the nut 42 spaced apart from the head 44. It is to be appreciated that the head 44 of the first fastener portion 36 may be external to the first component 12 or the second component 14 as illustrated in FIG. 1, or the head 44 of the first fastener portion 36 may be countersunk into the first component 12 or the second component 14.

Referring back to the tool 22, to tighten the fastener assembly 16, one of the segments 32A may engage the first fastener portion 36, such as the fastener 40 or the head 44, to prevent the first fastener portion 36 from moving while the other one of the segments 32B moves the second fastener portion 38, such as the nut 42, or, one of the segments 32A may engage the first fastener portion 36, such as the fastener 40 or the head 44, to move the first fastener portion 36 while the other one of the segments 32B prevents the second fastener portion 38, such as the nut 42, from moving. In yet another example, to tighten the fastener assembly 16, one of the segments 32A may engage the first fastener portion 36, such as the fastener 40 or the head 44, to move the first fastener portion 36 in a first direction while the other one of the segments 32B moves the second fastener portion 38, such as the nut 42, in another direction different from the first direction.

The fastener 40 may be disposed through the first aperture 18 and the second aperture 20 to attach together the first component 12 and the second component 14. More specifically, the head 44 may be attached to the fastener 40, and additionally, the fastener 40 may include a post 46 having the head 44 attached thereon, whereby the post 46 is disposed through the first aperture 18 and the second aperture 20. Generally, when the second fastener portion 38 is the nut 42, the fastener 40 and the nut 42 are threaded together to clamp together the first component 12 and the second component 14.

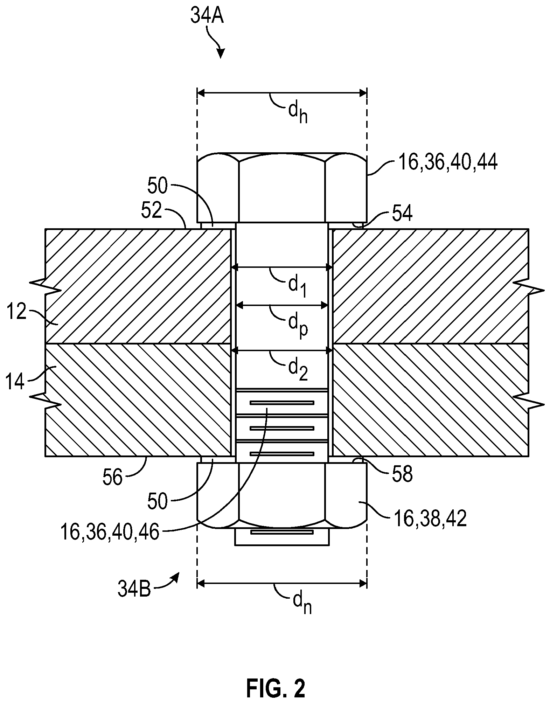

Turning to FIGS. 2-5, the head 44 of the fastener 40 has an outer head diameter dₕ greater than an outer post diameter dₚ of the post 46, and greater than a first hole diameter d₁ of the first aperture 18 of the first component 12. As such, referring to FIGS. 1-5, the head 44 may be attached to an end 34A of the fastener 40 to prevent the fastener 40 from passing through the first component 12 and the second component 14.

Continuing with FIGS. 1-5, the second fastener portion 38 also has an outer nut diameter dₙ greater than a second hole diameter d₂ of the second aperture 20 of the second component 14. The second fastener portion 38 may be attached to another end 34B of the fastener 40 to prevent the fastener 40 from passing through the first component 12 and the second component 14. Therefore, the head 44 and the second fastener portion 38 cooperate to prevent the fastener 40 from pulling through the apertures 18, 20 when the preload is applied to the fastener assembly 16.

Therefore, generally, the tool 22 may engage the head 44 and/or the nut 42 of the fastener assembly 16 to tighten the fastener 40 to the first component 12 and the second component 14. More specifically, one of the segments 32A of the tool 22 may engage the head 44 and another one of the segments 32B of the tool 22 may engage the nut 42. A tool force 48 may be applied to the fastener assembly 16 via the tool 22 until the compressive load 24 is reached, and thus, the preload is reached. In certain configurations, the tool force 48 may be a torque, and therefore, the post 46 of the fastener 40 and the nut 42 may be threaded to cooperate with each other. The fastener assembly 16 may be any suitable configuration, and non-limiting examples may include a bolt, a shoulder bolt, a jo-bolt, a stud, a screw, a hi-lok, a composi-lok, a rivet, a hex key, etc., which may cooperate with the nut 42, a collar, etc. In certain configurations, the head 44 of the fastener assembly 16 may be replaced via a nut 42, in which case, the fastener assembly 16 has nuts 42 at both ends 34A, 34B.

Referring to FIGS. 2-5, the fastening system 10 also includes a layer 50 disposed between the fastener assembly 16 and the first component 12 and/or the second component 14. That is, the layer 50 may be disposed between the fastener 40 and the first component 12 and/or the second component 14. Non-limiting examples of the layer 50 may include a material or a fluid that is painted, brushed, sprayed, adhered, dip-coated, deposited, vapor deposition, heat fusion, etc.

The layer 50 is configured to provide an alert when the compressive load 24 has been reached in the first component 12 and the second component 14. The alert serves as a signal that the preload of the fastener assembly 16 has been reached. In certain configurations, the tool force 48, such as the torque, is applied to the fastener assembly 16 until the alert is activated via the layer 50, which signals that the compressive load 24 has been reached in the first component 12 and the second component 14. Therefore, the alert is activated when the preload of the fastener 40 is reached which indicates to stop the tool force 48, such as torquing, on the fastener 40.

The fastening system 10 is designed to improve the accuracy and repeatability of obtaining the preload by using the layer 50 as the alert, and thus, reducing variability of the preload depending on the friction between the threaded engagement between the post 46 and the nut 42. In other words, even in light of manufacturing tolerances, the fastening system 10 described herein may obtain the desired preload via the layer 50. Therefore, using existing calculations based on friction with the torque wrench, as discussed above under the background section, does not need to be relied upon, and may be beneficially obviated.

The layer 50 may be disposed in any suitable location relative to the fastener assembly 16 and the components 12, 14 to provide the alert, and non-limiting examples are discussed below. It is to be appreciated that the layer 50 is not shown in FIG. 1 to illustrate other features of the fastening system 10, but the layer 50 may be disposed in FIG. 1 in any location as described herein.

As shown in FIGS. 2-5, generally, the layer 50 may be disposed between the head 44 and the second fastener portion 38. More specifically, the layer 50 may be disposed between the head 44 and the first component 12 and/or disposed between the second fastener portion 38 and the second component 14. As such, in certain configurations, the layer 50 may engage the fastener 40 and/or the nut 42. That is, the layer 50 may be disposed between the head 44 and the first component 12 and/or disposed between the second fastener portion 38, such as the nut 42, and the second component 14. Therefore, any suitable number of layers 50 may be used, and even though FIGS. 2-5 illustrate a plurality of layers 50, it is to be appreciated that one layer 50 may be utilized.

Referring to FIGS. 2-4, generally, the layer 50 may engage the first fastener portion 36 and/or the second fastener portion 38. In these configurations, the layer 50 may be attached to the head 44 of the first fastener 40 component and/or the second fastener portion 38 such as the nut 42.

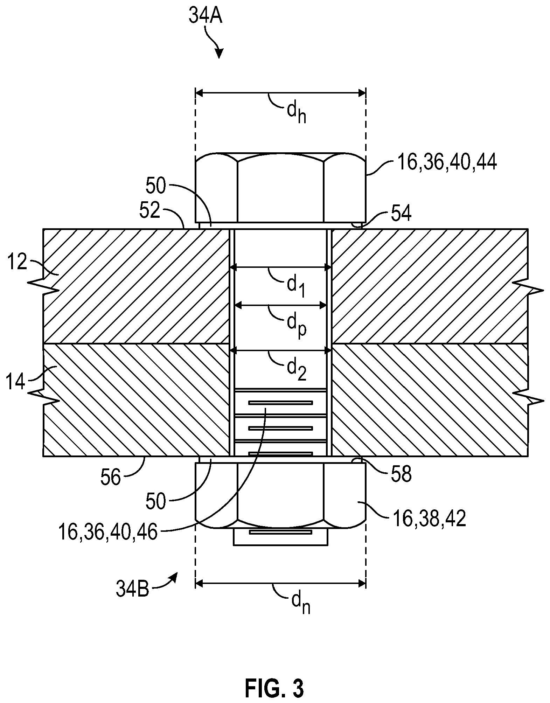

Turning to FIGS. 2 and 3, in these configurations, the layer 50 is attached to the head 44 and/or the first component 12, and/or the layer 50 is attached to the second fastener portion 38 and/or the second component 14. More specifically, the first component 12 may include a first face 52 that faces outwardly away from the second component 14 and the head 44 of the first fastener portion 36 may include a first surface 54 that faces toward the first component 12. Therefore, the first face 52 and the first surface 54 face each other. The layer 50 may be partially (see FIG. 2) or completely (see FIG. 3) disposed around the first surface 54 so as, respectively, to partially or completely surround the post 46 of the fastener 40. Similarly, the layer 50 may be partially (see FIG. 2) or completely disposed around the first face 52, so as, respectively, to partially or completely surround the first aperture 18 of the first component 12.

Continuing with FIGS. 2 and 3, the second component 14 may include a second face 56 that faces outwardly away from the first component 12 and the nut 42 of the second fastener portion 38 may include a second surface 58 that faces toward the second component 14. Therefore, the second face 56 and the second surface 58 face each other. The layer 50 may be partially (see FIG. 2) or completely (see FIG. 3) disposed around the second surface 58 so as, respectively, to partially or completely surround the post 46 of the fastener 40. Similarly, the layer 50 may be partially (see FIG. 2) or completely disposed around the second face 56 so as, respectively, to partially or completely surround the second aperture 20 of the second component 14.

Optionally, the fastener assembly 16 may include one or more washers 28 disposed between the head 44 of the fastener assembly 16 and the first component 12, and/or one or more washers 28 disposed between the second fastener portion 38 and the second component 14. For example, in certain configurations, if using one washer 28, the washer 28 may be disposed between the head 44 and the first component 12 or disposed between the second fastener portion 38 and the second component 14. As another example, if using two washers 28, a first washer 28 may be disposed between the head 44 and the first component 12, and a second washer 28 may be disposed between the second fastener portion 38 and the second component 14. As yet another example, if using two washers 28, both of the washers 28 may be disposed or stacked between the head 44 of the fastener assembly 16 and the first component 12, or both of the washers 28 may be disposed or stacked between the second fastener portion 38 and the second component 14. It is to be appreciated that any suitable number of the washers 28 may be disposed or stacked between the head 44 of the fastener assembly 16 and the first component 12, and/or disposed or stacked between the second fastener portion 38 and the second component 14.

Generally, the washers 28 include a first side surface 60 and a second side surface 62 opposing the first side surface 60. The first side surface 60 and the second side surface 62 of each of the washers 28 may be any suitable configuration, and non-limiting examples of the surfaces 60, 62 may include flat, arcuate, angled, tapered, chamfered, corrugated, etc. If the washer(s) 28 is/are disposed between the head 44 and the first component 12, the first side surface 60 of the corresponding washer 28 faces the first face 52 of the first component 12 and the second side surface 62 of that washer 28 faces the first surface 54 of the head 44. Similarly, if the washer(s) 28 is/are disposed between the nut 42 and the second component 14, the first side surface 60 of the corresponding washer 28 faces the second face 56 of the second component 14 and the second side surface 62 of that washer 28 faces the second surface 58 of the nut 42.

In certain configurations, the layer 50 may be disposed on a single washer 28, such as on the first side surface 60 and/or the second side surface 62. In other configurations, the layer 50 is disposed on the first washer 28, such as on the first side surface 60 and/or the second side surface 62 of the first washer 28, and, as well, on the second washer 28, such as on the first side surface 60 and/or the second side surface 62 of the second washer 28. It is to be appreciated that the layer 50 may be disposed on any suitable number of washers 28.

The layer 50 may be any suitable configuration to provide the alert. When the layer 50 is activated, the alert may be in the form of an observable feature or state that may be visually seen or perceived, may be in the form of a noise or sound that may be audibly heard or perceived, and/or may be in the form of an odor that may be smelled or perceived, and various ways to do so are discussed below. Optionally, the alert may be created by an exothermic reaction as discussed below.

In certain configurations, the layer 50 may be a coating. The coating may be applied to the fastener assembly 16 (including, for example, the head 44 and/or the nut 42), the first component 12, the second component 14, and/or one or more of the washers 28, if using the washers 28, and combinations thereof. The coating may be applied to the fastener assembly 16, the first component 12, the second component 14, and/or one or more of the washers 28 in any suitable way, and non-limiting examples may include a material or fluid that is painted, brushed, sprayed, adhered, dip-coated, deposited, vapor deposition, heat fusion, etc. If using the washers 28, optionally, the washers 28 may be dipped into the coating. In certain configurations, the coating may be a liquid fluid or gel, but it is to be appreciated that the coating may be any suitable configuration.

In certain configurations, the coating may include a first part 64 and a second part 66 that mix together to create the alert when the compressive load 24 has been reached. Therefore, the first part 64 and the second part 66 may react together via a chemical reaction to create the alert. For example, the first part 64 may be a product and the second part 66 may be a reactant. More specifically, the first part 64 may be an epoxy and the second part 66 may be a catalyst. In certain configurations, the first part 64 and/or the second part 66 may be a dye, or a paint pigment. It is to be appreciated that any suitable number of the parts 64, 66, i.e., more than two, may be mixed together to create the alert.

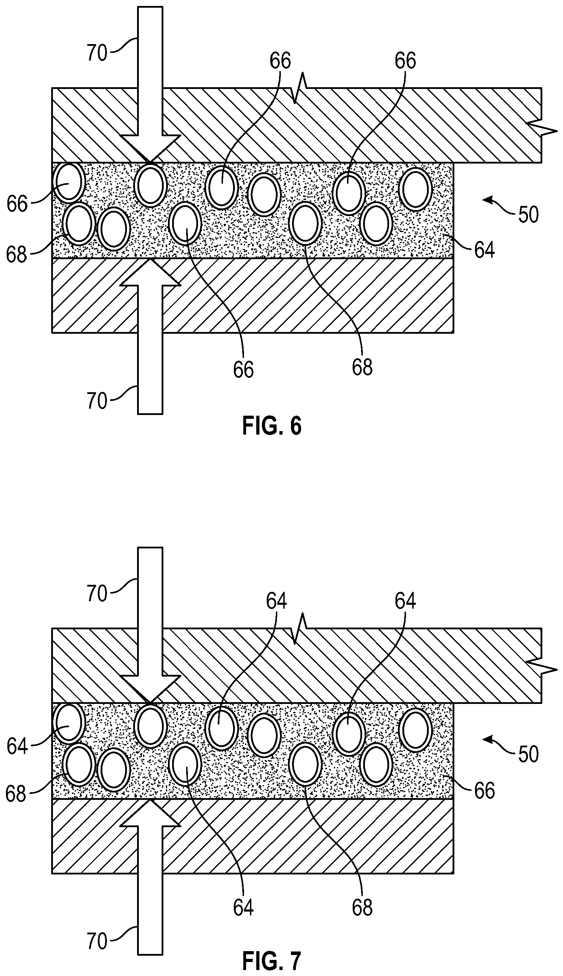

To prevent the first part 64 and the second part 66 from prematurely mixing, at least one of the parts 64, 66 are separated from each other until the compressive load 24 is reached which causes the parts 64, 66 to mix, as detailed further below. For example, the first part 64 and/or the second part 66 may be contained in a housing 68 (see FIGS. 6-8) to prevent mixing of the first part 64 and the second part 66 until the desired preload has been reached or to prevent expelling the dye or the paint pigment until the desired preload has been reached.

Alternatively, in certain configurations, mixing of the parts 64, 66 is not required. For example, regarding the configuration where the dye or the paint pigment is contained in the housing 68, when the housing 68 breaks, the dye or the paint pigment may be expelled out of the housing 68 to provide a visual alert. That is, mixing of the parts 64, 66 to cause a reaction to provide the visual alert is not required.

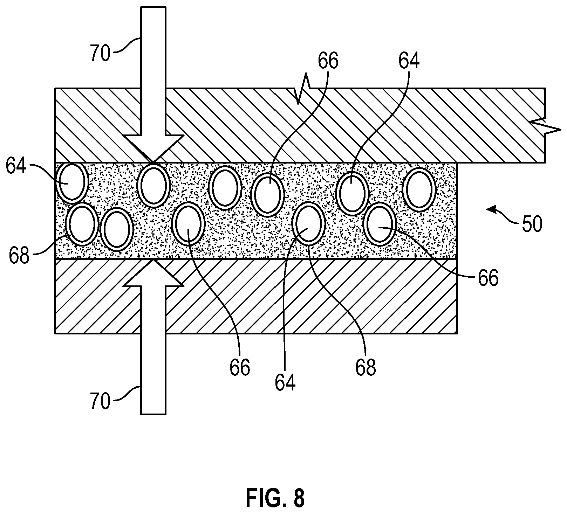

In certain configurations, the second part 66 is contained in the housing 68 and the first part 64 is coated on the fastener assembly 16 (including, for example, the head 44 and/or the nut 42), the first component 12, the second component 14, and/or one or more of the washers 28 (see FIG. 6). In other configurations, the first part 64 is contained in the housing 68 and the second part 66 is coated on the fastener assembly 16 (including, for example, the head 44 and/or the nut 42), the first component 12, the second component 14, and/or one or more of the washers 28 (see FIG. 7). In yet other configurations, the first part 64 and the second part 66 are contained in separate housings 68 (see FIG. 8), and the coating outside of the housings 68 is used to attach the layer 50 to the fastener assembly 16 (including, for example, the head 44 and/or the nut 42), the first component 12, the second component 14, and/or one or more of the washers 28. The housing 68 is fractured or broken when a compressive load 24 has been reached which indicates, in turn, that the predetermined preload has been reached, sufficient to allow the first part 64 and/or the second part 66 to exit the housing 68 and mix with the other part so as to create the alert or expel from the housing 68 to create the alert. Expelling or mixing of the parts 64, 66 may create an audible alert, a scent or odor alert, and/or an exothermic alert, such as a visual alert and/or a temperature change alert.

In other configurations, the layer 50 may include an audible feature. As one example, the audible feature may include a fracturable material that fractures when the compressive load 24 has been reached to create a sound as the alert. Therefore, for example, the housing 68 discussed above may be used but in certain configurations does not contain the first part 64 and/or the second part 66. The housing 68 may be empty or may contain a material that crinkles, cracks, etc., so as to make an audible sound when compressed via the compressive load 24. Therefore, upon fracturing or breaking the housing 68, the sound, as an audible alert, occurs. Another example, the audible feature may include a conical or cupped washer, similar to a Belleville washer, instead of the housing 68, and the conical or cupped washer flattens when the compressive load 24 has been reached to make the sound as the alert. The breaking strength of the housing 68 is determined based on the preload of the fastener assembly 16.

In yet other configurations, the layer 50 may include a visual feature. As one example of the visual feature, the visual feature may include a coating that changes color to create the alert when the compressive load 24 has been reached. As another example, the visual feature may also be an exothermic reaction in which the housings 68 discussed above may be used to mix the first part 64 and the second part 66 together cause a reaction that may be visually seen as a spark or flash of light. Alternatively, the housing 68 may break to expose a color, such as the dye or the paint pigment discussed above, which does not require mixing between two or more parts 64, 66. Therefore, in certain configurations, each of the housings 68 may contain the same part, such as a first part 64 that contains the color. The breaking strength of the housing 68 is determined based on the preload of the fastener assembly 16. As one example, a fluorescent color may be exposed in which an ultraviolet light or goggles may be used to detect the fluorescent color as the visual feature. In other configurations, the visual feature may be a material upon being compressed creates a spark or flash of light as the alert when the compressive load 24 has been reached.

In other configurations, the layer 50 may include a temperature feature. The temperature feature may also be an exothermic reaction in which the housings 68 discussed above may be used to mix the first part 64 and the second part 66 together cause a reaction that may create a temperature change that may be physically detected or detected, e.g., via a thermal camera or an infrared camera. In other configurations, the temperature feature may be a material which, upon being compressed, creates or produces heat when the compressive load 24 has been reached. Therefore, the housings 68 in the figures may be replaced via the material of the temperature feature and will not be further illustrated.

In yet other configurations, the layer 50 may include a scent or smell feature. As one example of the scent or smell feature, the housing 68 may break to release a scent or smell which does not require mixing between two or more parts 64, 66 as the scent or smell feature. Therefore, in certain configurations, each of the housings 68 may contain the same part, such as a first part 64 that contains the scent or smell. The breaking strength of the housing 68 is determined based on the preload of the fastener assembly 16. As another example of the scent or smell feature, the layer 50 may contain one or more materials that frictionally engage or rub against each other to activate the scent or smell when the compressive load 24 has been reached.

It is to be appreciated that all of the figures may be representative of the different configurations of the layer 50, and therefore, FIGS. 6-8 should not exclude examples related to the scent or smell feature, the visual feature, the temperature feature, and the audible feature.

The present disclosure also provides a method of preloading the fastener assembly 16. Generally, the layer(s) 50 is applied to the desired location before attaching together the first component 12 and the second component 14.

The fastener 40 of the fastener assembly 16 is inserted through the first component 12 and the second component 14 to attach together the first component 12 and the second component 14. The layer 50 is applied to the desired location before inserting the fastener 40 through the first component 12 and the second component 14. Generally, as mentioned above, the layer 50 is configured to provide the alert which signals that the preload of the fastener 40 has been reached.

The tool 22 is used to tighten the fastener assembly 16 against the first component 12 and the second component 14 to compress the first component 12 and the second component 14 together until the predetermined compressive load 24 has been reached at the joint. During this process, the tool force 48 is applied to the fastener assembly 16 until the compressive load 24 is reached. In certain configurations, the torque is applied to the fastener assembly 16 until the compressive load 24 has been reached in the first component 12 and the second component 14 which activates the alert. A force 70 is applied to the layer 50 as the tool force 48, such as torque, is applied to the fastener assembly 16 via operation of the tool 22. The force 70 may be a compression force as the first component 12 and the second component 14 are clamped together via the compressive load 24. The alert of the layer 50 is activated when the compressive load 24 has been reached, which signals that the preload of the fastener assembly 16 has been reached.

As discussed above, in certain configurations, the layer 50 may include the coating, the audible feature, the visual feature, the temperature feature, and/or the scent or smell feature, which may provide the alert as discussed above and will not be repeated.

When the alert is activated, the tool force 48, such as the torque, is removed from the fastener assembly 16. Then, another fastener assembly 16 may be disposed through the first aperture 18 of the first component 12 and the second aperture 20 of the second component 14 at a different location along the joint and preloaded as described herein, which may be repeated for the desired number of fastener assemblies 16 used to clamp together the first component 12 and the second component 14 along the joint.

It is to be appreciated that the order or sequence of performing the method(s) as discussed above is for illustrative purposes and other orders or sequences are within the scope of the present teachings. It is to also be appreciated that the method(s) may include other features not specifically identified in the method discussion immediately above.

## Claims

1. A fastening system (10) comprising:
a first component (12);
a second component (14);
a fastener assembly (16) configured to attach together the first component (12) and the second component (14);
a layer (50) disposed between the fastener assembly (16) and the first component (12) and/or the second component (14); and
wherein the layer (50) is configured to provide an alert when a predetermined compressive load (24) has been reached in the first component (12) and the second component (14) which signals that a preload of the fastener assembly (16) has been reached;
wherein the layer (50) includes an audible feature; and
wherein the audible feature includes a fracturable material that fractures when the predetermined compressive load (24) has been reached to create a sound as the alert.

2. The system as set forth in claim 1, wherein the layer (50) is a coating which includes a first part (64) and a second part (66) that mix together to create the alert when the compressive load has been reached,
wherein the first part (64) and/or the second part (66) are contained in a housing (68) to prevent mixing of the first part (64) and the second part (66) until the preload of the fastener assembly (16) is reached; and
wherein the housing (68) is either empty or contains a material that crinkles or cracks when compressed via the compressive load (24).

3. The system as set forth in claim 2, wherein the coating is a liquid fluid or gel.

4. The system as set forth in claim 1, wherein the audible feature includes a conical or cupped washer, wherein the conical or cupped washer is configured to flatten when the compressive load (24) has been reached to make the sound as the alert.

5. A fastening system (10) comprising:
a first component (12);
a second component (14);
a fastener assembly (16) configured to attach together the first component (12) and the second component (14);
a layer (50) disposed between the fastener assembly (16) and the first component (12) and/or the second component (14);
wherein the layer (50) is configured to provide an alert when a predetermined compressive load (24) has been reached in the first component (12) and the second component (14) which signals that a preload of the fastener assembly (16) has been reached;
wherein the layer (50) is a coating which includes a first part (64) and a second part (66) that mix together to create the alert when the compressive load has been reached,
wherein the first part (64) and/or the second part (66) are contained in a housing (68) to prevent mixing of the first part (64) and the second part (66) until the preload of the fastener assembly (16) is reached;
wherein the layer (50) comprises a visual feature;
wherein the visual feature includes an exothermic reaction causing a reaction that may be visually seen as a spark or flash of light when the predetermined compressive load (24) causes the materials of the first part (64) and second part (66) to be mixed together.

6. A fastening system (10) comprising:
a first component (12);
a second component (14);
a fastener assembly (16) configured to attach together the first component (12) and the second component (14);
a layer (50) disposed between the fastener assembly (16) and the first component (12) and/or the second component (14);
wherein the layer (50) is configured to provide an alert when a predetermined compressive load (24) has been reached in the first component (12) and the second component (14) which signals that a preload of the fastener assembly (16) has been reached;
wherein the layer (50) is a coating which includes a first part (64) and a second part (66) that mix together to create the alert when the compressive load has been reached,
wherein the first part (64) and/or the second part (66) are contained in a housing (68) to prevent mixing of the first part (64) and the second part (66) until the preload of the fastener assembly (16) is reached;
wherein the layer (50) comprises a temperature feature;
wherein the temperature feature includes an exothermic reaction causing a reaction that creates a temperature change that is physically detected or detected via a thermal camera or an infrared camera, when the predetermined compressive load (24) causes the materials of the first part (64) and second part (66) to be mixed together.

7. A fastening system (10) comprising:
a first component (12);
a second component (14);
a fastener assembly (16) configured to attach together the first component (12) and the second component (14);
a layer (50) disposed between the fastener assembly (16) and the first component (12) and/or the second component (14);
wherein the layer (50) is configured to provide an alert when a predetermined compressive load (24) has been reached in the first component (12) and the second component (14) which signals that a preload of the fastener assembly (16) has been reached;
wherein the layer (50) is a coating which includes a first part (64) and a second part (66) that mix together to create the alert when the compressive load has been reached,
wherein the first part (64) and/or the second part (66) are contained in a housing (68) to prevent mixing of the first part (64) and the second part (66) until the preload of the fastener assembly (16) is reached;
wherein the layer (50) comprises a scent or smell feature;
wherein the first part (64) and/or the second part (66) contains a scent or smell;
wherein the scent or smell feature includes the release of a scent or smell, when the predetermined compressive load (24) causes the break of the housing (68).

8. The system as set forth in any one of the preceding claims, wherein the fastener assembly (16) includes a first fastener portion (36) and a second fastener portion (38), wherein the layer (50) engages the first fastener portion (36) and/or the second fastener portion (38).

9. The system as set forth in any one of the preceding claims, wherein the first fastener portion (36) includes a head (44), wherein the layer (50) is attached to the head (44) and/or the second fastener portion (38).

10. The system as set forth in claim 9 wherein the second fastener portion (38) includes a nut (42) spaced apart from the head (44), wherein the layer (50) is attached to the head (44) and/or the nut (42).

11. The system as set forth in any one of claims9-10, wherein the fastener assembly (16) includes a first washer (28) disposed between the head (44) and the first component (12) or disposed between the second fastener portion (38) and the second component (14), wherein the layer (50) is disposed on the first washer (28).

12. The system as set forth in claim 11 wherein the fastener assembly (16) includes a second washer (28), wherein the first washer (28) is disposed between the head (44) and the first component (12), and the second washer (28) is disposed between the second fastener portion (38) and the second component (14), wherein the layer (50) is disposed on the first washer (28) and the second washer (28).

13. The system as set forth in any one of claims 1-7, wherein the fastener assembly (16) includes a fastener (40) and a nut (42), wherein the layer (50) engages the fastener (40) and/or the nut (42), wherein the fastener (40) and the nut (42) are threaded together to clamp together the first component (12) and the second component (14), wherein torque is applied to the fastener assembly (16) until the alert is activated via the layer (50), which signals that the predetermined compressive load (24) has been reached in the first component (12) and the second component (14).

14. A method of preloading a fastener assembly (16), the method comprising:
inserting a fastener (40) of the fastener assembly (16) through a first component (12) and a second component (14) to attach together the first component (12) and the second component (14), wherein a layer (50) is disposed between the fastener assembly (16) and the first component (12) and/or the second component (14), wherein the layer (50) is configured to provide an alert which signals that a preload of the fastener (40) has been reached;
wherein the layer (50) either comprises an audible feature, or a visual feature including an exothermic reaction that is seen as a spark or flash light, or a temperature feature, or a scent or smell feature;
applying torque to the fastener assembly (16) until a predetermined compressive load (24) has been reached in the layer (50) which activates the alert.

15. The method as set forth in claim 14 further comprising removing the torque from the fastener assembly (16) when the alert is activated.

## Patentansprüche

1. Befestigungssystem (10), das aufweist:
eine erste Komponente (12);
eine zweite Komponente (14);
eine Befestigungsanordnung (16), die eingerichtet ist, die erste Komponente (12) und die zweite Komponente (14) aneinander anzubringen;
eine Schicht (50), die zwischen der Befestigungsanordnung (16) und der ersten Komponente (12) und/oder der zweiten Komponente (14) angeordnet ist; und
wobei die Schicht (50) eingerichtet ist, einen Alarm bereitzustellen, wenn eine vorbestimmte Drucklast (24) in der ersten Komponente (12) und der zweiten Komponente (14) erreicht worden ist, was signalisiert, dass eine Vorspannung der Befestigungsanordnung (16) erreicht worden ist;
wobei die Schicht (50) eine akustische Eigenschaft umfasst; und
wobei die akustische Eigenschaft ein brechbares Material umfasst, das bricht, wenn die vorbestimmte Drucklast (24) erreicht worden ist, um ein Geräusch als den Alarm zu erzeugen.

2. System nach Anspruch 1, wobei die Schicht (50) eine Beschichtung ist, die einen ersten Teil (64) und einen zweiten Teil (66) umfasst, die sich miteinander mischen, um den Alarm zu erzeugen, wenn die Drucklast erreicht worden ist,
wobei der erste Teil (64) und/oder der zweite Teil (66) in einem Gehäuse (68) enthalten sind, um ein Mischen des ersten Teils (64) und des zweiten Teils (66) zu verhindern, bis die Vorspannung der Befestigungsanordnung (16) erreicht ist; und
wobei das Gehäuse (68) entweder leer ist oder ein Material enthält, das knistert oder knackt, wenn es durch die Drucklast (24) komprimiert wird.

3. System nach Anspruch 2, wobei die Beschichtung ein flüssiges Fluid oder Gel ist.

4. System nach Anspruch 1, wobei die akustische Eigenschaft eine konische oder gewölbte Unterlegscheibe umfasst, wobei die konische oder gewölbte Unterlegscheibe eingerichtet ist, abzuflachen, wenn die Drucklast (24) erreicht worden ist, um das Geräusch als den Alarm zu erzeugen.

5. Befestigungssystem (10), das aufweist:
eine erste Komponente (12);
eine zweite Komponente (14);
eine Befestigungsanordnung (16), die eingerichtet ist, die erste Komponente (12) und die zweite Komponente (14) aneinander anzubringen;
eine Schicht (50), die zwischen der Befestigungsanordnung (16) und der ersten Komponente (12) und/oder der zweiten Komponente (14) angeordnet ist;
wobei die Schicht (50) eingerichtet ist, einen Alarm bereitzustellen, wenn eine vorbestimmte Drucklast (24) in der ersten Komponente (12) und der zweiten Komponente (14) erreicht worden ist, was signalisiert, dass eine Vorspannung der Befestigungsanordnung (16) erreicht worden ist;
wobei die Schicht (50) eine Beschichtung ist, die einen ersten Teil (64) und einen zweiten Teil (66) umfasst, die sich miteinander mischen, um den Alarm zu erzeugen, wenn die Drucklast erreicht worden ist,
wobei der erste Teil (64) und/oder der zweite Teil (66) in einem Gehäuse (68) enthalten sind, um ein Mischen des ersten Teils (64) und des zweiten Teils (66) zu verhindern, bis die Vorspannung der Befestigungsanordnung (16) erreicht ist;
wobei die Schicht (50) eine visuelle Eigenschaft aufweist;
wobei die visuelle Eigenschaft eine exotherme Reaktion umfasst, die eine Reaktion verursacht, die visuell als ein Funke oder Lichtblitz zu sehen sein kann, wenn die vorbestimmte Drucklast (24) bewirkt, dass die Materialien des ersten Teils (64) und des zweiten Teils (66) miteinander gemischt werden.

6. Befestigungssystem (10), das aufweist:
eine erste Komponente (12);
eine zweite Komponente (14);
eine Befestigungsanordnung (16), die eingerichtet ist, die erste Komponente (12) und die zweite Komponente (14) aneinander anzubringen;
eine Schicht (50), die zwischen der Befestigungsanordnung (16) und der ersten Komponente (12) und/oder der zweiten Komponente (14) angeordnet ist;
wobei die Schicht (50) eingerichtet ist, einen Alarm bereitzustellen, wenn eine vorbestimmte Drucklast (24) in der ersten Komponente (12) und der zweiten Komponente (14) erreicht worden ist, was signalisiert, dass eine Vorspannung der Befestigungsanordnung (16) erreicht worden ist;
wobei die Schicht (50) eine Beschichtung ist, die einen ersten Teil (64) und einen zweiten Teil (66) umfasst, die sich miteinander mischen, um den Alarm zu erzeugen, wenn die Drucklast erreicht worden ist,
wobei der erste Teil (64) und/oder der zweite Teil (66) in einem Gehäuse (68) enthalten sind, um ein Mischen des ersten Teils (64) und des zweiten Teils (66) zu verhindern, bis die Vorspannung der Befestigungsanordnung (16) erreicht ist;
wobei die Schicht (50) eine Temperatureigenschaft aufweist;
wobei die Temperatureigenschaft eine exotherme Reaktion umfasst, die eine Reaktion verursacht, die eine Temperaturänderung erzeugt, die physisch erfasst oder über eine Wärmebildkamera oder eine Infrarotkamera erfasst wird, wenn die vorbestimmte Drucklast (24) bewirkt, dass die Materialien des ersten Teils (64) und des zweiten Teils (66) miteinander gemischt werden.

7. Befestigungssystem (10), das aufweist:
eine erste Komponente (12);
eine zweite Komponente (14);
eine Befestigungsanordnung (16), die eingerichtet ist, die erste Komponente (12) und die zweite Komponente (14) aneinander anzubringen;
eine Schicht (50), die zwischen der Befestigungsanordnung (16) und der ersten Komponente (12) und/oder der zweiten Komponente (14) angeordnet ist;
wobei die Schicht (50) eingerichtet ist, einen Alarm bereitzustellen, wenn eine vorbestimmte Drucklast (24) in der ersten Komponente (12) und der zweiten Komponente (14) erreicht worden ist, was signalisiert, dass eine Vorspannung der Befestigungsanordnung (16) erreicht worden ist;
wobei die Schicht (50) eine Beschichtung ist, die einen ersten Teil (64) und einen zweiten Teil (66) umfasst, die sich miteinander mischen, um den Alarm zu erzeugen, wenn die Drucklast erreicht worden ist,
wobei der erste Teil (64) und/oder der zweite Teil (66) in einem Gehäuse (68) enthalten sind, um ein Mischen des ersten Teils (64) und des zweiten Teils (66) zu verhindern, bis die Vorspannung der Befestigungsanordnung (16) erreicht ist;
wobei die Schicht (50) eine Duft- oder Geruchseigenschaft aufweist;
wobei der erste Teil (64) und/oder der zweite Teil (66) einen Duft oder Geruch enthalten;
wobei die Duft- oder Geruchseigenschaft die Freisetzung eines Dufts oder Geruchs umfasst, wenn die vorbestimmte Drucklast (24) das Brechen des Gehäuses (68) bewirkt.

8. System nach einem der vorhergehenden Ansprüche, wobei die Befestigungsanordnung (16) einen ersten Befestigungsabschnitt (36) und einen zweiten Befestigungsabschnitt (38) umfasst, wobei die Schicht (50) mit dem ersten Befestigungsabschnitt (36) und/oder dem zweiten Befestigungsabschnitt (38) in Eingriff steht.

9. System nach einem der vorhergehenden Ansprüche, wobei der erste Befestigungsabschnitt (36) einen Kopf (44) umfasst, wobei die Schicht (50) an dem Kopf (44) und/oder dem zweiten Befestigungsabschnitt (38) angebracht ist.

10. System nach Anspruch 9, wobei der zweite Befestigungsabschnitt (38) eine Mutter (42) umfasst, die von dem Kopf (44) beabstandet ist, wobei die Schicht (50) an dem Kopf (44) und/oder der Mutter (42) angebracht ist.

11. System nach einem der Ansprüche 9 - 10, wobei die Befestigungsanordnung (16) eine erste Unterlegscheibe (28) umfasst, die zwischen dem Kopf (44) und der ersten Komponente (12) angeordnet ist oder die zwischen dem zweiten Befestigungsabschnitt (38) und der zweiten Komponente (14) angeordnet ist, wobei die Schicht (50) auf der ersten Unterlegscheibe (28) angeordnet ist.

12. System nach Anspruch 11, wobei die Befestigungsanordnung (16) eine zweite Unterlegscheibe (28) umfasst, wobei die erste Unterlegscheibe (28) zwischen dem Kopf (44) und der ersten Komponente (12) angeordnet ist und die zweite Unterlegscheibe (28) zwischen dem zweiten Befestigungsabschnitt (38) und der zweiten Komponente (14) angeordnet ist, wobei die Schicht (50) auf der ersten Unterlegscheibe (28) und der zweiten Unterlegscheibe (28) angeordnet ist.

13. System nach einem der Ansprüche 1 bis 7, wobei die Befestigungsanordnung (16) eine Befestigungseinrichtung (40) und eine Mutter (42) umfasst, wobei die Schicht (50) mit der Befestigungseinrichtung (40) und/oder der Mutter (42) in Eingriff steht, wobei die Befestigungseinrichtung (40) und die Mutter (42) miteinander verschraubt sind, um die erste Komponente (12) und die zweite Komponente (14) aneinanderzuklemmen, wobei ein Drehmoment auf die Befestigungsanordnung (16) aufgebracht wird, bis der Alarm über die Schicht (50) aktiviert wird, was signalisiert, dass die vorbestimmte Drucklast (24) in der ersten Komponente (12) und der zweiten Komponente (14) erreicht worden ist.

14. Verfahren zum Vorspannen einer Befestigungsanordnung (16), wobei das Verfahren aufweist:
Einführen einer Befestigungseinrichtung (40) der Befestigungsanordnung (16) durch eine erste Komponente (12) und eine zweite Komponente (14), um die erste Komponente (12) und die zweite Komponente (14) aneinander anzubringen, wobei eine Schicht (50) zwischen der Befestigungsanordnung (16) und der ersten Komponente (12) und/oder der zweiten Komponente (14) angeordnet ist, wobei die Schicht (50) eingerichtet ist, einen Alarm bereitzustellen, welcher signalisiert, dass eine Vorspannung des Befestigungselements (40) erreicht worden ist;
wobei die Schicht (50) entweder eine akustische Eigenschaft, oder eine visuelle Eigenschaft, die eine exotherme Reaktion umfasst, die als ein Funke oder Lichtblitz zu sehen ist, oder eine Temperatureigenschaft, oder eine Duft- oder Geruchseigenschaft aufweist;
Aufbringen eines Drehmoments auf die Befestigungsanordnung (16), bis eine vorbestimmte Drucklast (24) in der Schicht (50) erreicht worden ist, welche den Alarm aktiviert.

15. Verfahren nach Anspruch 14, das ferner ein Entfernen des Drehmoments von der Befestigungsanordnung (16) aufweist, wenn der Alarm aktiviert wird.

## Revendications

1. Système de fixation (10) comprenant :
• un premier composant (12) ;
• un deuxième composant (14) ;
• un ensemble d'éléments de fixation (16) configuré pour fixer ensemble le premier composant (12) et le deuxième composant (14) ; et
• une couche (50) disposée entre l'ensemble d'éléments de fixation (16) et le premier composant (12) et/ou le deuxième composant (14) ; et
• dans lequel la couche (50) est configurée pour émettre une alerte lorsqu'une charge de compression prédéterminée (24) a été atteinte dans le premier composant (12) et le deuxième composant (14), ce qui indique qu'une précharge de l'ensemble d'éléments de fixation (16) a été atteinte ;
• dans lequel la couche (50) comprend une caractéristique audible ; et
• dans lequel la caractéristique audible comprend un matériau fracturable qui se fracture lorsque la charge de compression prédéterminée (24) a été atteinte pour créer un son en guise d'alerte.

2. Système selon la revendication 1, dans lequel la couche (50) est un revêtement qui comprend une première partie (64) et une deuxième partie (66) qui se mélangent pour créer l'alerte lorsque la charge de compression a été atteinte,
• dans lequel la première partie (64) et/ou la deuxième partie (66) sont contenues dans un boîtier (68) pour empêcher le mélange de la première partie (64) et de la deuxième partie (66) jusqu'à ce que la précharge de l'ensemble d'éléments de fixation (16) soit atteinte ; et
• dans lequel le boîtier (68) est soit vide, soit contient un matériau qui se froisse ou se fissure lorsqu'il est comprimé via la charge de compression (24).

3. Système selon la revendication 2, dans lequel le revêtement est un fluide liquide ou un gel.

4. Système selon la revendication 1, dans lequel la caractéristique audible comprend une rondelle conique ou en coupelle, dans lequel la rondelle conique ou en coupelle est configurée pour s'aplatir lorsque la charge de compression (24) a été atteinte pour émettre le son en guise d'alerte.

5. Système de fixation (10) comprenant :
• un premier composant (12) ;
• un deuxième composant (14) ;
• un ensemble d'éléments de fixation (16) configuré pour fixer ensemble le premier composant (12) et le deuxième composant (14) ; et
• une couche (50) disposée entre l'ensemble d'éléments de fixation (16) et le premier composant (12) et/ou le deuxième composant (14) ;
• dans lequel la couche (50) est configurée pour émettre une alerte lorsqu'une charge de compression prédéterminée (24) a été atteinte dans le premier composant (12) et le deuxième composant (14), ce qui indique qu'une précharge de l'ensemble d'éléments de fixation (16) a été atteinte ;
• dans lequel la couche (50) est un revêtement qui comprend une première partie (64) et une deuxième partie (66) qui se mélangent pour créer l'alerte lorsque la charge de compression a été atteinte,
• dans lequel la première partie (64) et/ou la deuxième partie (66) sont contenues dans un boîtier (68) pour empêcher le mélange de la première partie (64) et de la deuxième partie (66) jusqu'à ce que la précharge de l'ensemble d'éléments de fixation (16) soit atteinte ;
• dans lequel la couche (50) comprend une caractéristique visuelle ;
• dans lequel la caractéristique visuelle comprend une réaction exothermique provoquant une réaction qui peut être perçue visuellement comme une étincelle ou un éclat de lumière lorsque la charge de compression prédéterminée (24) amène les matériaux de la première partie (64) et de la deuxième partie (66) à se mélanger.

6. Système de fixation (10) comprenant :
• un premier composant (12) ;
• un deuxième composant (14) ;
• un ensemble d'éléments de fixation (16) configuré pour fixer ensemble le premier composant (12) et le deuxième composant (14) ; et
• une couche (50) disposée entre l'ensemble d'éléments de fixation (16) et le premier composant (12) et/ou le deuxième composant (14) ;
• dans lequel la couche (50) est configurée pour émettre une alerte lorsqu'une charge de compression prédéterminée (24) a été atteinte dans le premier composant (12) et le deuxième composant (14), ce qui indique qu'une précharge de l'ensemble d'éléments de fixation (16) a été atteinte ;
• dans lequel la couche (50) est un revêtement qui comprend une première partie (64) et une deuxième partie (66) qui se mélangent pour créer l'alerte lorsque la charge de compression a été atteinte,
• dans lequel la première partie (64) et/ou la deuxième partie (66) sont contenues dans un boîtier (68) pour empêcher le mélange de la première partie (64) et de la deuxième partie (66) jusqu'à ce que la précharge de l'ensemble d'éléments de fixation (16) soit atteinte ;
• dans lequel la couche (50) comprend une caractéristique thermique ;
• dans lequel la caractéristique thermique comprend une réaction exothermique provoquant une réaction qui crée un changement de température qui est détecté physiquement ou détecté via une caméra thermique ou une caméra infrarouge, lorsque la charge de compression prédéterminée (24) amène les matériaux de la première partie (64) et de la deuxième partie (66) à se mélanger.

7. Système de fixation (10) comprenant :
• un premier composant (12) ;
• un deuxième composant (14) ;
• un ensemble d'éléments de fixation (16) configuré pour fixer ensemble le premier composant (12) et le deuxième composant (14) ; et
• une couche (50) disposée entre l'ensemble d'éléments de fixation (16) et le premier composant (12) et/ou le deuxième composant (14) ;
• dans lequel la couche (50) est configurée pour émettre une alerte lorsqu'une charge de compression prédéterminée (24) a été atteinte dans le premier composant (12) et le deuxième composant (14), ce qui indique qu'une précharge de l'ensemble d'éléments de fixation (16) a été atteinte ;
• dans lequel la couche (50) est un revêtement qui comprend une première partie (64) et une deuxième partie (66) qui se mélangent pour créer l'alerte lorsque la charge de compression a été atteinte,
• dans lequel la première partie (64) et/ou la deuxième partie (66) sont contenues dans un boîtier (68) pour empêcher le mélange de la première partie (64) et de la deuxième partie (66) jusqu'à ce que la précharge de l'ensemble d'éléments de fixation (16) soit atteinte ;
• dans lequel la couche (50) comprend une caractéristique de parfum ou olfactive ;
• dans lequel la première partie (64) et/ou la deuxième partie (66) contient un parfum ou une odeur ;
• dans lequel la caractéristique de parfum ou olfactive comprend la libération d'un parfum ou d'une odeur, lorsque la charge de compression prédéterminée (24) provoque la rupture du boîtier (68).

8. Système selon l'une quelconque des revendications précédentes, dans lequel l'ensemble d'éléments de fixation (16) comprend une première partie d'élément de fixation (36) et une deuxième partie d'élément de fixation (38), dans lequel la couche (50) coopère avec la première partie d'élément de fixation (36) et/ou la deuxième partie d'élément de fixation (38).

9. Système selon l'une quelconque des revendications précédentes, dans lequel la première partie d'élément de fixation (36) comprend une tête (44), dans lequel la couche (50) est attachée à la tête (44) et/ou à la deuxième partie d'élément de fixation (38).

10. Système selon la revendication 9, dans lequel la deuxième partie d'élément de fixation (38) comprend un écrou (42) espacé de la tête (44), dans lequel la couche (50) est attachée à la tête (44) et/ou à l'écrou (42).

11. Système selon l'une quelconque des revendications 9-10, dans lequel l'ensemble d'éléments de fixation (16) comprend une première rondelle (28) disposée entre la tête (44) et le premier composant (12) ou disposée entre la deuxième partie d'élément de fixation (38) et le deuxième composant (14), dans lequel la couche (50) est disposée sur la première rondelle (28).

12. Système selon la revendication 11, dans lequel l'ensemble d'éléments de fixation (16) comprend une deuxième rondelle (28), dans lequel la première rondelle (28) est disposée entre la tête (44) et le premier composant (12), et la deuxième rondelle (28) est disposée entre la deuxième partie d'élément de fixation (38) et le deuxième composant (14), dans lequel la couche (50) est disposée sur la première rondelle (28) et la deuxième rondelle (28).

13. Système selon l'une quelconque des revendications 1-7, dans lequel l'ensemble d'éléments de fixation (16) comprend un élément de fixation (40) et un écrou (42), dans lequel la couche (50) coopère avec l'élément de fixation (40) et/ou l'écrou (42), dans lequel l'élément de fixation (40) et l'écrou (42) sont vissés ensemble pour serrer ensemble le premier composant (12) et le deuxième composant (14), dans lequel un couple est appliqué à l'ensemble d'éléments de fixation (16) jusqu'à ce que l'alerte soit activée via la couche (50), ce qui indique que la charge de compression prédéterminée (24) a été atteinte dans le premier composant (12) et le deuxième composant (14).

14. Procédé de précharge d'un ensemble d'éléments de fixation (16), le procédé comprenant :
• l'insertion d'un élément de fixation (40) de l'ensemble d'éléments de fixation (16) à travers un premier composant (12) et un deuxième composant (14) pour fixer ensemble le premier composant (12) et le deuxième composant (14), dans lequel une couche (50) est disposée entre l'ensemble d'éléments de fixation (16) et le premier composant (12) et/ou le deuxième composant (14), dans lequel un couple est appliqué à l'ensemble d'éléments de fixation (16) jusqu'à ce que l'alerte soit activée via la couche (50), ce qui indique qu'une précharge de l'élément de fixation (40) a été atteinte ;
• dans lequel la couche (50) comprend soit une caractéristique audible, soit une caractéristique visuelle comprenant une réaction exothermique qui est perçue comme une étincelle ou un éclat de lumière, soit une caractéristique thermique, soit une caractéristique de parfum ou olfactive ;
• l'application d'un couple à l'ensemble d'éléments de fixation (16) jusqu'à ce qu'une charge de compression prédéterminée (24) ait été atteinte dans la couche (50), ce qui active l'alerte.

15. Procédé selon la revendication 14 comprenant en outre le retrait du couple de l'ensemble d'éléments de fixation (16) lorsque l'alerte est activée.
